# Europäisches Patentamt

## European Patent Office

## Office européen des brevets

(11) Veröffentlichungsnummer: **0 040 768**
**B1**

(12) **EUROPÄISCHE PATENTSCHRIFT**

(45) Veröffentlichungstag der Patentschrift:
17.04.85

(21) Anmeldenummer: 81103723.3

(22) Anmeldetag: 14.05.81

(51) Int. Cl.⁴: **H 02 H 7/16,** H 02 H 3/36, H 02 H 3/44

(54) Überwachungseinrichtung für einen LC-Filterkreis an einem Wechselspannungsnetz.

(30) Priorität: 27.05.80 DE 3020107

(43) Veröffentlichungstag der Anmeldung:
02.12.81 Patentblatt 81/48

(45) Bekanntmachung des Hinweises auf die Patenterteilung:
17.04.85 Patentblatt 85/16

(84) Benannte Vertragsstaaten:
DE GB SE

(56) Entgegenhaltungen:
DE - A - 2 264 064
FR - A - 1 402 917
FR - A - 1 403 148
GB - A - 1 189 246
US - A - 4 219 856

(73) Patentinhaber: **Siemens Aktiengesellschaft, Berlin und München Wittelsbacherplatz 2, D-8000 München 2 (DE)**

(72) Erfinder: **Becker, Michael, Dipl.-Ing, Ringstrasse 50, D-8521 Uttenreuth (DE)**
Erfinder: **Povh, Dusan Dr., Waltherstrasse 3, D-8500 Nürnberg (DE)**
Erfinder: **Schuch, Gerhard, Heuweg 8, D-8520 Erlangen (DE)**
Erfinder: **Fendt, Alfons, Dipl.-Ing, Gleiwitzer Strasse 64, D-8520 Erlangen (DE)**
Erfinder: **Renz, Klaus, Dipl.-Ing., Heinrich-Heine-Strasse 15, D-8510 Fürth (DE)**
Erfinder: **Waldmann, Hermann Dr., Wiesenstrasse 14, D-8521 Weiher (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 040 768 B1

**Beschreibung**

Die Erfindung betrifft eine Überwachungseinrichtung für einen LC-Filterkreis an einem Wechselspannungsnetz, dessen Kondensatorbatterie aus einer Anzahl von parallelen Strängen mit jeweils einer Anzahl von in Reihe geschalteten und miteinander mittels durchgehender Querleitungen verbundener Teilkondensatoren mit Sicherungen besteht, wobei ein unter Erfassung der Filterspannung nachgebildeter Filterstrom mit dem gemessenen Filterstrom unter Elimination des Einflusses der Netzoberschwingungen verglichen wird. Eine derartige Überwachungseinrichtung ist nach der FR-A-1 403 148 bekannt.

Bei LC-Filterkreisen mit Kondensatorbatterien, welche eine große Anzahl von parallelen Strängen bzw. eine große Anzahl von in Reihe geschalteten Teilkondensatoren aufweisen, ändert sich bei Ausfall eines Kondensators der Filterstrom nur in sehr geringem Maße, wobei noch erschwerend hinzukommt, daß bei solchen Kondensatorbatterien die durch Temperatureinflüsse verursachten Stromänderungen größer sein können als die Stromänderungen, die durch den Ausfall eines oder mehrerer Teilkondensatoren verursacht werden. Für solche Anwendungsfälle erweist sich daher die bekannte Überwachungseinrichtung als nicht zuverlässig genug.

Der Erfindung liegt die Aufgabe zugrunde, eine Überwachungseinrichtung für einen LC-Filterkreis der eingangs genannten Art zu schaffen, die meßtechnisch einfach ausführbar ist und den Ausfall eines oder mehrerer Teilkondensatoren zuverlässig anzeigt. Diese Aufgabe wird erfindungsgemäß durch die im kennzeichnenden Teil des Hauptanspruches angegebenen Merkmale gelöst.

Der entscheidende Vorteil gegenüber der bekannte Überwachungseinrichtung ergibt sich bei der erfindungsgemäßen Überwachungseinrichtung durch den transienten Vergleich zwischen dem nachgebildeten und dem gemessenen Filterstrom. Unter einem transienten Vergleich wird verstanden, daß nur schnelle Änderungen zwischen dem nachgebildeten und dem gemessenen Filterstrom als Fehlersignal ausgewertet werden, während allmählich auftretende Änderungen nicht zu einer Fehlermeldung führen.

Es wird noch darauf verwiesen, daß nach der EP-A-0 040 766 beansprucht ist, bei Drehstrom-LC-Filterkreisen in Sternschaltung Änderungen von Betrag und Phasenlage des vom Sternpunkt zur Erde abfließenden Nullstroms transient auszuwerten, und nach der EP-A-0 040 765 beansprucht ist, bei Kondensatorbatterien den Unterschied zwischen der gemessenen und der nachgebildeten Spannung der Kondensatorbatterie transient auszuwerten.

Weitere Ausgestaltungen der Erfindung sind in den abhängigen Ansprüchen gekennzeichnet.

Bei einer erfindungsgemäßen Überwachungseinrichtung wird der Grundschwingungsstrom durch den LC-Filterkreis an einem Wechselspannungsnetz ausgewertet. Durch eine elektronische Nachbildung wird ein Referenzsignal für den Grundschwingungsstrom im ungestörten Zustand gewonnen. Dieses Referenzsignal wird mit der Grundschwingung des gemessenen Filter- bzw. Kondensatorstromes verglichen. Abweichungen deuten auf einen Defekt eines Teilkondensators. Damit Änderungen des Grundschwingungsstromes, die durch Temperatureinflüsse verursacht werden, nicht zu falschen Meldungen führen, wird ein transienter Vergleich des nachgebildeten und des gemessenen Grundschwingungsstromes vorgenommen. Unter einem transienten Vergleich wird verstanden, daß nur schnelle Änderungen zwischen dem nachgebildeten und dem gemessenen Grundschwingungsstrom als Fehlersignal ausgewertet werden, während langsam auftretende Änderungen nicht zu einer Fehlerauswertung führen.

Eine erfindungsgemäße Überwachungseinrichtung kann für einphasige LC-Filterkreise als auch Drehstrom-Filterkreise eingesetzt werden.

Ausführungsbeispiele der Erfindung sind in den Zeichnungen dargestellt und werden im folgenden näher beschrieben. Zum einfacheren Verständnis werden alle Spannungen in der informationsverarbeitenden Elektronik mit den physikalischen Größen bezeichnet, die sie abbilden. Es zeigt

Fig. 1 eine schematische Darstellung einer erfindungsgemäßen Überwachungseinrichtung für die Kondensatorbatterien eines Drehstrom-Filterkreises,

Fig. 2 ein Ersatzschaltbild eines Stranges eines LC-Filterkreises,

Fig. 3 den Aufbau einer elektronischen Nachbildung eines LC-Filterkreises,

Fig. 4 den Aufbau eines Siebgliedes,

Fig. 5 den Aufbau einer transienten Vergleichsschaltung,

Fig. 6 den Aufbau eines Melde- und Auslösekreises,

Fig. 7 eine schematische Darstellung einer Ausführungsform einer erfindungsgemäßen Überwachungseinrichtung für einen einphasigen Filterkreis,

Fig. 8 eine schematische Darstellung einer weiteren Ausführungsform einer erfindungsgemäßen Überwachungseinrichtung für einen einphasigen Filterkreis,

Fig. 9 eine andere Ausführungsform eines Siebgliedes.

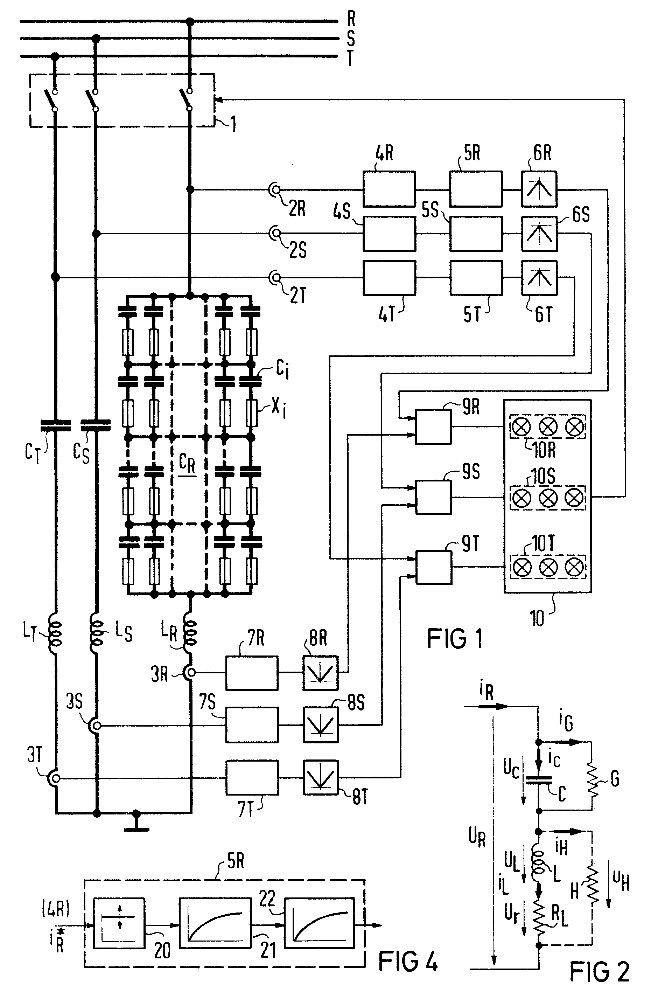

Fig. 1 zeigt eine schematische Darstellung einer erfindungsgemäßen Überwachungseinrichtung für die Kondensatorbatterien $C_R$, $C_S$, $C_T$ eines Drehstromfilterkreises, der über eine Schalteinrichtung 1 an eine Drehstrom-Sammelschiene mit den Phasen RST angeschlossen ist.

Der dreiphasige Filterkreis besteht aus drei LC-Reihenschwingkreisen, die in Stern geschaltet und sternpunktseitig geerdet sind. Die LC-Reihenschwingkreise sind auf die Frequenz einer charakteristischen Oberschwingung abgestimmt.

Die Kondensatorbatterien $C_R$, $C_S$, $C_T$ des Drehstrom-Filterkreises bestehen jeweils aus einer Anzahl von parallelen Strängen mit jeweils einer Anzahl von in Reihe geschalteten Teilkondensatoren $C_i$ mit Sicherungen $X_i$, wobei benachbarte Teilkondensatoren mit durchgehenden Querleitungen verbunden sind. Zur Verdeutlichung ist in der Zeichnung lediglich die Kondensatorbatterie $C_R$ ausführlicher dargestellt, während die gleichartig aufgebauten Kondensatorbatterien $C_S$ und $C_T$ zeichnerisch nur mit dem Symbol eines Kondensators dargestellt sind. Eine derartige Kondensatorbatterie kann mehr als 100 Einzelkondensatoren enthalten. Beim Ausfall eines Einzelkondensators ändert sich die wirksame Kapazität einer Phase und damit auch die Grundschwingung des Phasenstroms nur sehr wenig. Derartige geringe Stromänderungen sind bei den hohen Stromstärken der Phasenströme meßtechnisch nur schwer erfaßbar.

Die Phasenspannung des LC-Reihenschwingkreises mit der Kondensatorbatterie $C_R$ und der Drosselspule $L_R$ wird von einem potentialtrennenden Spannungsmeßwandler 2 R erfaßt. In gleicher Weise wird die Phasenspannung des LC-Reihenschwingkreises mit der Kondensatorbatterie $C_S$ und der Drosselspule $L_S$ von einem potentialtrennenden Spannungsmeßwandler 2 S, sowie die Phasenspannung des LC-Reihenschwingkreises mit der Kondensatorbatterie $C_T$ und der Drosselspule $L_T$ von einem potentialtrennenden Spannungsmeßwandler 2 T gemessen. An den Bürden der Spannungsmeßwandler 2 R, 2 S, 2 T fallen Meßspannungen auf dem Spannungsniveau der Signalverarbeitung ab, die den jeweiligen Phasenspannungen proportional sind. Den potentialtrennenden Spannungsmeßwandlern können Entkopplungsverstärker nachgeschaltet sein, um die Wandlerkreise von der nachfolgenden signalverarbeitenden Elektronik zu trennen. Durch eine derartige Trennung des Hochspannungspotentials vom Elektronikpotential können Störungen in der Anlage nicht in die Elektronik übergekoppelt werden.

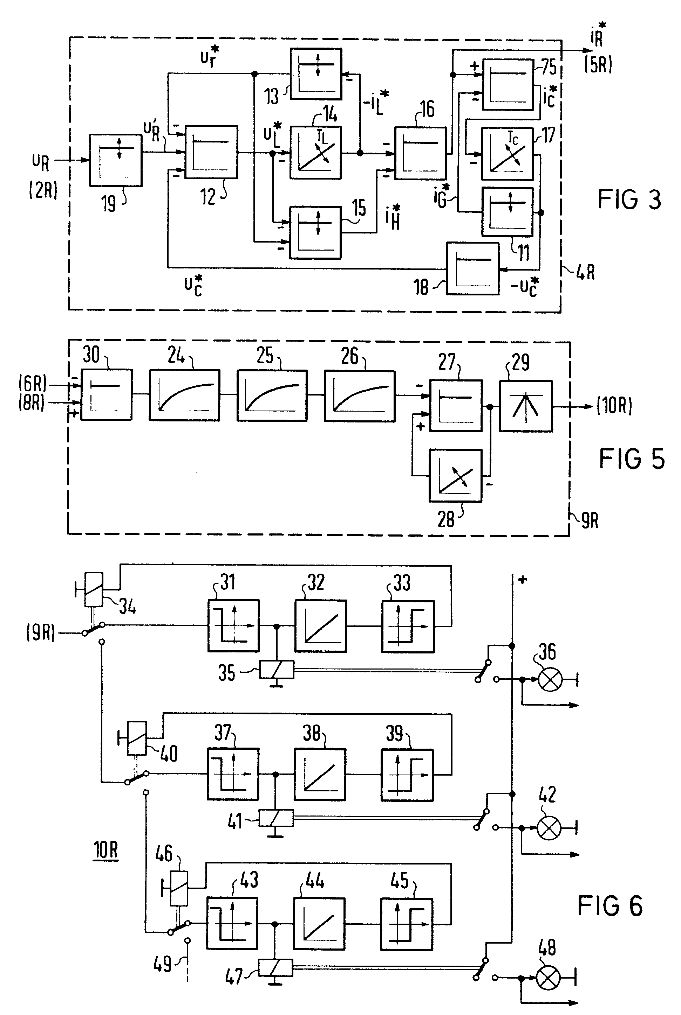

Die an der Potentialseite der Kondensatorbatterien gemessenen Phasenspannungen werden elektronischen Filternachbildungen 4R, 4S, 4T zugeführt. Aufbau und Wirkungsweise einer derartigen elektronischen Filternachbildung werden anhand der Fig. 2 und 3 näher beschrieben. Die nachgebildeten Filterströme werden in Tiefpaßfiltern 5R, 5S, 5T geglättet. Die Tiefpaßfilter unterdrücken die Oberschwingungen weitgehend. Die geglätteten nachgebildeten Filterströme werden in Betragsbildner 6R, 6S, 6T zu negativen Werten gleichgerichtet.

Die Phasenströme werden an der Sternpunktseite des Filters mit potentialtrennenden Strommeßwandlern 3R, 3S, 3T erfaßt. Den Strommeßwandlern können wiederum Entkopplungsverstärker nachgeschaltet sein. Die gemessenen Phasenströme werden auf Tiefpaßfilter 7R, 7S, 7T gegeben, deren Aufbau den Tiefpaßfiltern 5R, 5S, 5T entspricht. Die Tiefpaßfilter 7R, 7S, 7T erzeugen für die Grundschwingung eine Phasendrehung. Die geglätteten Meßwerte für die Phasenströme werden durch Betragsbildner 8R, 8S, 8T zu positiven Werten gleichgerichtet.

Die Grundschwingungen der gemessenen Phasenströme werden mit den Grundschwingungen der zugehörigen Modellfilterströme verglichen, um eine Art »Lupeneffekt« zu erreichen. Hierzu sind transiente Vergleichsschaltungen 9R, 9S, 9T vorgesehen. Die transienten Vergleichsschaltungen sind auf einen Melde- und Auslösekreis 10 mit Phasenanzeigen 10R, 10S, 10T geführt. Der Aufbau der transienten Vergleicherschaltung 9R ist in Fig. 5 näher erläutert. Der Aufbau der Phasenanzeige 10R des Melde- und Auslösekreises 10 ist in Fig. 6 näher erläutert.

Fig. 2 zeigt ein Ersatzschaltbild eines LC-Reihenschwingkreises mit der Kapazität C der Kondensatorbatterie, dem Gleichstromleitwert G der Kondensatorbatterie, der Induktivität L der Drosselspule, dem Gleichstromwiderstand $R_L$ der Drosselspule und dem Hochpaßwiderstand H der Drosselspule. Die Ströme und Spannungen sind mit entsprechenden Indizes bezeichnet.

Fig. 3 zeigt den Schaltungsaufbau der elektronischen Filternachbildung 4R, der im folgenden unter Bezugnahme auf das Ersatzschaltbild der Fig. 2 beschrieben wird. Die elektronische Filternachbildung 4R enthält zur Anpassung einen Verstärker 19 mit einstellbarer Verstärkung, der eingangsseitig mit der gemessenen Phasenspannung $u_R$ beaufschlagt ist. Die angepaßte Phasenspannung $u_R'$ wird zusammen mit einem nachgebildeten Kondensatorspannungsabfall $u_c^*$ und einem nachgebildeten Spannungsabfall $u_r^*$ am Gleichstromwiderstand $R_L$ der Drosselspule einem Addierverstärker 12 zugeführt. Der Addierverstärker 12 ermittelt aus diesen Eingangsgrößen einen nachgebildeten Drosselspannungsabfall $u_L^*$ nach Gl. (1):

$$u_L^* = -(-u_R' + u_r^* + u_c^*) \qquad (1)$$

Der nachgebildete Drosselspannungsabfall $u_L^*$ wird einem Integrator 14 mit einstellbarer Integrationszeitkonstante $T_L$ zugeführt, der einen nachgebildeten Drosselstrom $-i_L^*$ nach Gl. (2) ermittelt:

$$-i_L^*(t) = \frac{-1}{T_L} \int_0^t u_L^*(\tau)\, d\tau. \qquad (2)$$

Der nachgebildete Drosselstrom $-i_L^*$ wird in einem Verstärker 13 mit einstellbarer Verstärkung in einen nachgebildeten Spannungsabfall $u_r^*$ am Gleichstromwiderstand $R_L$ der Drosselspule umgesetzt nach Gl. (3):

$$u_r^* = -(-i_L^* \cdot R_L) \qquad (3)$$

Zur Nachbildung des Hochpaßwiderstandes H ist ein weiterer Verstärker 15 mit einstellbarer Verstärkung vorgesehen, dem eingangsseitig der nachgebildete Drosselspannungsabfall $u_L^*$ und der nachgebildete Spannungsabfall $u_r^*$ am Gleichstromwiderstand $R_L$ der Drosselspule zugeführt wird. Die Ausgangsspannung des Verstärkers 15 stellt den nachgebildeten Strom $-i_H^*$ durch den Hochpaßwiderstand H nach Gl. (4) dar. Ist der Filterkreis kein Hochpaß, so wird die Verstärkung des Verstärkers 15 so eingestellt, daß seine Ausgangsspannung stets Null ist.

$$-i_H^* = -(u_r^* + u_L^*) \cdot \frac{1}{H}. \qquad (4)$$

Zur Ermittlung des nachgebildeten Phasenstroms $i_R^*$ nach Gl. (5) ist ein Addierverstärker 16 vorgesehen, dem eingangsseitig der nachgebildete Drosselstrom $-i_L^*$ und der nachgebildete Strom $-i_H^*$ durch den Hochpaßwiderstand H zugeführt werden.

$$i_R^* = -(-i_H^* - i_L^*) \qquad (5)$$

Zur Ermittlung des nachgebildeten Kondensatorspannungsabfalls wird der nachgebildete Kondensatorstrom $i_c^*$ als Differenz zwischen dem nachgebildeten Phasenstrom $i_R^*$ und einem nachgebildeten Strom $i_G^*$ durch den Gleichstromleitwert G der Kondensatorbatterie in einem Differenzglied 75 gebildet und im Integrator 17 integriert. Der Integrator 17 mit einstellbarer Integrationszeitkonstante $T_c$ realisiert die Gl. (6):

$$-u_c^*(t) = -\frac{1}{T_c} \int_0^t ((i_R^*(\tau) - i_G^*(\tau)) \, d\tau. \qquad (6)$$

Der nachgebildete Spannungsabfall $u_c^*$ an der Kondensatorbatterie der Phase R wird über einen Umkehrverstärker 18 auf einen Eingang des Addierverstärkers 12 zurückgeführt und über einen Verstärker 11 mit einstellbarer Verstärkung, der zur Nachbildung des Gleichstromleitwerts G der Kondensatorbatterie vorgesehen ist, auf den Integrator 17 zurückgeführt.

Die Operationsverstärker des Filtermodells können mit einer sogenannten Feedfordward-Bekämpfung beschaltet sein, um den ausnützbaren Frequenzbereich zu erweitern.

Fig. 4 zeigt das Schaltbild des Tiefpaßfilters 5 R. Der nachgebildete Filterstrom $i_R^*$ wird über einen Anpaßverstärker 20 mit einstellbarer Verstärkung auf ein zweistufiges Siebglied mit den Tiefpässen 21 und 22 gegeben.

Durch entsprechende Dimensionierung der beiden Tiefpässe 21 und 22 kann beispielsweise ein Dämpfungsverhalten erreicht werden, bei dem die 11. und 13. Harmonische auf weniger als 1% unterdrückt werden, während die Grundschwingungsamplitude nur etwa um 50% erniedrigt wird.

Fig. 5 zeigt das Blockschaltbild der transienten Vergleichsschaltung 9 R. Die gleichgerichtete Grundschwingung des Modellfilterstromes von der Gleichrichterschaltung 6 R und die gleichgerichtete Grundschwingung des gemessenen Phasenstromes von der Gleichrichterschaltung 8 R werden einem Verstärker 30 zugeführt. Die Ausgangsspannung des Verstärkers 30 wird einem dreistufigen Siebglied mit den Tiefpässen 24, 25 und 26 zugeführt. Das dreistufige Siebglied wandelt das Eingangssignal in eine Gleichgröße um. Hierdurch erreicht man, daß nur die Amplituden der nachgebildeten Filterströme und der gemessenen Phasenströme miteinander verglichen werden.

Durch Temperatureinflüsse auf die Kondensatorbatterien des Filterkreises können sich die Phasenströme langsam ändern. Die nachgebildeten Phasenströme ändern sich jedoch nicht durch derartige Temperatureinflüsse, da die elektronischen Filternachbildungen nicht nachgeführt werden. Allmählich auftretende Differenzen zwischen den nachgebildeten Phasenströmen und den gemessenen Phasenströmen deuten nicht auf einen Defekt in einer Kondensatorbatterie und werden daher für die Auswertung unterdrückt. Hierzu ist dem dreistufigen Siebglied 24, 25, 26 ein Differenzierer nachgeschaltet, der aus einem Verstärker 27 und aus einem Integrator 28 in der Rückkopplung besteht. Am Ausgang des Differenzierers 27, 28 werden somit nur durch Kondensatorfehler erzeugte plötzliche Phasenstromänderungen als Impulse an den Melde- und Auslösekreis 10 weitergegeben und anschließend vom Differenzierer 27, 28 auf Null ausgeregelt. Dem Differenzierer 27, 28 ist ein Betragsbildner 29 nachgeschaltet, der das Ausgangssignal des Differenzierers 27, 28 zu negativen Werten gleichrichtet, da sowohl Impulse positiver als auch negativer Polarität auftreten können. Das Ausgangssignal des Betragsbildners 29 wird auf den Melde- und Auslösekreis 10 weitergegeben.

Fig. 6 zeigt das Blockschaltbild der Phasenanzeige 10 R des Melde- und Auslösekreises 10. Der gleichgerichtete Vergleichswert von der Vergleichsschaltung 9 R wird auf Zählstufen gegeben, die jeweils einen eingangsseitigen Grenzwertmelder 31 bzw. 37 bzw. 43 aufweisen. Die eingangsseitigen Grenzwertmelder sind so eingestellt, daß plötzliche Stromdifferenzen, die durch einen defekten Teilkondensator in der Kondensatorbatterie hervorgerufen werden, ein Ausgangssignal des betreffenden Grenzwertmelders ergeben. Die Ansprechschwellwerte der Grenzwertmelder 31, 37, 43 sind auf gleiche Werte eingestellt.

Den eingangsseitigen Grenzwertmeldern sind jeweils Zeitstufen nachgeschaltet, die jeweils aus einem Integrator 32, 38, 44 und einem weiteren Grenzwertmelder 33, 39, 45 bestehen. Die Ausgangssignale der weiteren Grenzwertmelder 33, 39, 45 steuern jeweils ein Relais 34, 40, 46 im Eingang der eingangsseitigen Grenzwertmelder 31, 37, 43. Die Ausgangssignale der eingangsseitigen Grenzwertmelder 31, 37, 43 steuern ebenfalls Relais 35, 41, 47, die wiederum Anzeigen 36, 42, 48 steuern. Die Phasenanzeige 10 R ist über eine Leitung 49 für den Anschluß weiterer Zählstufen erweiterbar.

Die Wirkungsweise der Phasenanzeige 10 R des Melde- und Auslösekreises 10 ist wie folgt: Wenn durch einen Defekt eines Teilkondensators in der Kondensatorbatterie eine entsprechende Eingangsspannung auf den eingangsseitigen Grenzwertmelder 31 der ersten Zählstufe gelangt, so spricht der Grenzwertmelder 31 an. Durch Aufleuchten der Anzeige 36 wird ein erster defekter Teilkondensator in der Phase R angezeigt. Hat der Grenzwertmelder 31 angesprochen, so läuft der Integrator 32 hoch, bis seine Ausgangsspannung den Ansprechschwellenwert des weiteren Grenzwertmelders 33 erreicht. Das Ausgangssignal des weiteren Grenzwertmelders 33 steuert das Relais 34 um, so daß die transiente Vergleichsschaltung 9 R nunmehr mit der zweiten Zählstufe 37 bis 41 verbunden ist.

Die Hochintegrationszeit des Integrators 32 der ersten Zählstufe ist in der Größenordnung von einigen Sekunden eingestellt, während die Rückintegrationszeit erheblich weniger als 1 Sekunde beträgt. Die Hochintegrationszeit ist länger als die maximale Zeit bis eine Sicherung bei einem durch einen defekten Teilkondensator verursachten Zeilenkurzschluß schmilzt. Die Rückintegrationszeit bestimmt, wie lange man einen — nicht dargestellten — Rückstellknopf drücken muß, um nach Beseitigung eines Kondensatorfehlers die anstehende Meldung zu quittieren. Durch Quittieren der entsprechenden Meldung werden die Relais 34 bzw 40 bzw 46 wieder in die gezeichnete Lage umgesteuert.

Bei einem Defekt eines zweiten Teilkondensators wird — sofern die erste Zählstufe nicht quittiert wurde — die zweite Zählstufe 37 bis 41 angesteuert. Durch Aufleuchten der Anzeige 42 wird der zweite defekte Teilkondensator angezeigt. Hat der Grenzwertmelder 37 in der zweiten Zählstufe angesprochen, so läuft der Integrator 38 hoch, bis seine Ausgangsspannung den Ansprechschwellenwert des weiteren Grenzwertmelders 39 erreicht. Dieser steuert das Relais 40 um, so daß nunmehr die transiente Vergleichsschaltung 9 R mit der dritten Zählstufe 43 bis 47 verbunden ist. Die Hochintegrationszeit und die Rückintegrationszeit des Integrators 38 und die Ansprech-Schwellenwerte der weiteren Grenzwertmelder 39 und 45 weisen vorzugsweise die gleichen Werte auf wie bei der ersten Zählstufe.

Bei einem Defekt eines dritten Teilkondensators wird — sofern die erste und die zweite Zählstufe nicht quittiert wurden — die dritte Zählstufe 43 bis 47 angesteuert. Durch Aufleuchten der Anzeige 48 wird der dritte defekte Teilkondensator angezeigt.

Die Zählstufen des Melde- und Auslösekreises 11 ermöglichen die folgende abgestufte Überwachungsstrategie: Wird nur ein defekter Teilkondensator gemeldet, so kann der Filterkreis bis zur nächsten regulären Wartung in Betrieb bleiben. Werden dagegen zwei defekte Teilkondensatoren gemeldet, so kann der Filterkreis nur noch eine beschränkte Zeit in Betrieb bleiben, die beispielsweise so bemessen ist, daß das Wartungspersonal herbeigerufen werden kann. Werden schließlich drei defekte Teilkondensatoren gemeldet, so ist der Filterkreis sofort abzuschalten. Zur Steuerung einer entsprechenden Kommandoeinrichtung können die Signale zur Ansteuerung der Anzeigen 36, 42, 48 parallel herausgeführt werden.

Anstelle der Tiefpaßfilter 5 und 7 können auch andere Siebglieder, insbesondere Resonanzfilterkreise eingesetzt werden.

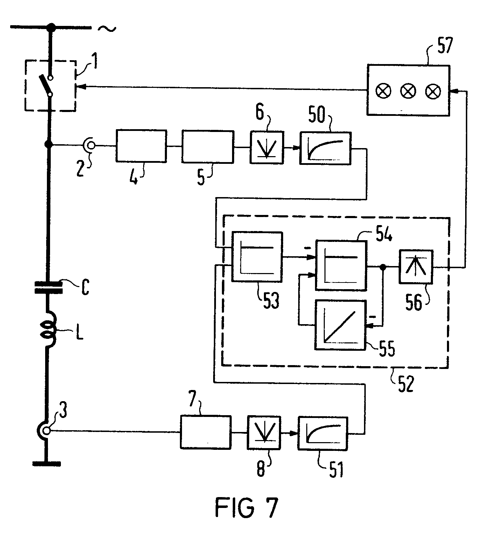

Fig. 7 zeigt eine alternative Ausführung einer erfindungsgemäßen Überwachungseinrichtung. Gleiche Baugruppen sind mit gleichen Bezugszeichen wie in den Figuren 1 bis 6 bezeichnet.

In Fig. 7 ist ein einphasiger LC-Filterkreis dargestellt, der über eine Schalteinrichtung 1 an ein Wechselspannungsnetz angeschlossen ist. Ein Spannungsmeßwandler 2 erfaßt die Filterspannung. Ein Strommeßwandler 3 erfaßt den Filterstrom. Aus der gemessenen Filterspannung wird durch die elektronische Filternachbildung 4 ein nachgebildeter Filterstrom ermittelt und über ein Siebglied 5 geführt, das die Oberschwingungen unterdrückt und die Grundschwingung des nachgebildeten Filterstroms liefert. Der gemessene Filterstrom wird über ein Siebglied 7 geführt, das mit dem Siebglied 5 übereinstimmt. Das Siebglied 7 liefert die Grundschwingung des gemessenen Filterstroms. Die Grundschwingung des nachgebildeten Filterstroms und die Grundschwingung des gemessenen werden nunmehr in Gleichgrößen gewandelt. Hierzu wird die Grundschwingung des nachgebildeten Filterstroms über einen Betragsbildner 6 mit einem nachgeschalteten Siebglied 50 und die Grundschwingung des gemessenen Filterstroms über einen Betragsbildner 8 mit einem nachgeschalteten Siebglied 51 geführt. Die Siebglieder 50 und 51 können gegebenenfalls mehrstufig aufgebaut sein, wie in Fig. 4 dargestellt ist oder wie in Fig. 5 mit den Tiefpässen 24, 25, 26. Der transiente Vergleich der den Amplituden der Grundschwingungen des nachgebildeten und des gemessenen Filterstroms proportionalen Gleichgrößen wird von einem Vergleichsglied 52 durchgeführt, das einen Differenzverstärker 53 zur Differenzbildung, einen Differenzierer mit einem Verstärker 54 und einen Integrator 55 in der Rückführung, sowie einen Betragsbildner 56 aufweist. Dem Vergleichsglied 52 ist ein Melde- und Auslösekreis 57 nachgeschaltet, der einen ähnlichen Aufbau besitzen kann wie eine in Fig. 6 dargestellten Zählstufe im Melde- und Auslösekreis 10.

Im Unterschied zu der in Fig. 1 dargestellten Überwachungseinrichtung werden im Vergleichsglied 52 in Fig. 7 Gleichgrößen miteinander verglichen, während in den Vergleichsgliedern 9 R, 9 S, 9 T der Fig. 1 die Grundschwingungen des nachgebildeten und des gemessenen Filterstroms miteinander verglichen werden und die ermittelte Differenz in einem Siebglied 24, 25, 26 (siehe Fig. 5) geglättet wird. Dieser Vergleich der Grundschwingungen des nachgebildeten und des gemessenen Filterstroms ist möglich, da diese Grundschwingungen in Phase liegen. Dies ist möglich, wenn die Siebglieder 5 und 7 aufeinander abgeglichen sind. Die Überwachungseinrichtung der Fig. 1 erfordert daher einen geringeren Aufwand als die Überwachungseinrichtung in Fig. 7.

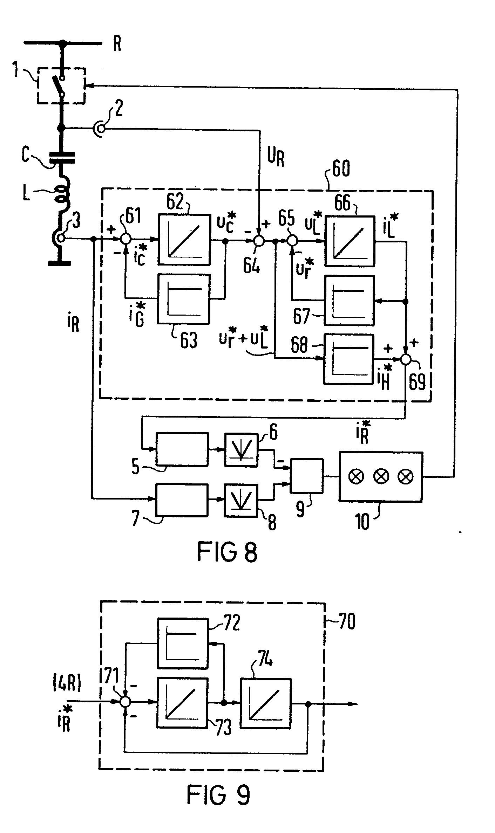

Fig. 8 zeigt für einen einphasigen LC-Filterkreis eine weitere Ausführungsform einer erfindungsgemäßen Überwachungseinrichtung, bei der eine elektronische Filternachbildung 60 eingesetzt wird, die den Filterstrom im ungestörten Zustand aus dem gemessenen Filterstrom $i_R$ und der gemessenen Filterspannung $u_R$ ermittelt. Die elektronische Filternachbildung 60 ist als regelungstechnisches Strukturbild dargestellt und wird unter Bezugnahme auf das in Fig. 2 dargestellte Ersatzschaltbild beschrieben.

An die Phase R eines Wechselspannungsnetzes ist über eine Schalteinrichtung 1 ein LC-Filterkreis angeschlossen. Ein Spannungsmeßwandler 2 erfaßt die Filterspannung $U_R$, ein Strommeßwandler 3 erfaßt den Filterstrom $i_R$. Beide Meßwerte werden der elektronischen Filternachbildung 60 zugeführt. Die elektronische Filternachbildung 60 enthält ein Differenzglied 61, dem der gemessene Filterstrom $i_R$ und der nachgebildete Strom $i_G^*$ von einem Verstärker 63 mit einstellbarem Verstärkungsfaktor zugeführt werden, der den Leitwert G der Kondensatorbatterie C nachbildet. Die vom Differenzglied 61 gebildete Stromdifferenz, die den nachgebildeten Kondensatorstrom $i_c^*$ darstellt, wird in einem Integrator 62 mit einstellbarer Integrationszeitkonstante in den nachgebildeten Kondensatorspannungsabfall $u_c^*$ umgeformt. Der nachgebildete Kondensatorspannungsabfall $u_c^*$ wird im Verstärker 63, der den Leitwert G der Kondensatorbatterie nachbildet, in den nachgebildeten Strom $i_G^*$ umgerechnet. In einem weiteren Differenzverstärker 64 wird von der gemessenen Filterspannung $u_R$ der nachgebildete Kondensatorspannungsabfall $u_c^*$ abgezogen. Die ermittelte Differenz, die der Summe aus dem nachgebildeten Spannungsabfall $u_r^*$ am Gleichstromwiderstand der Induktivität L und dem nachgebildeten Spannungsabfall $u_L^*$ an der Induktivität L entspricht, wird einem dritten Differenzglied 65 zugeführt. Im dritten Differenzglied 65 wird hiervon der nachgebildete Spannungsabfall $u_r^*$ am Gleichstromwiderstand R der Induktivität L abgezogen. Als Ergebnis wird der nachgebildete Spannungsabfall $u_L^*$ an der Induktivität L erhalten und in einem weiteren Integrator 66 mit einstellbarer Intergrationszeitkonstante in den nachgebildeten Strom $i_L^*$ durch die Induktivität L umgeformt. Der nachgebildete Strom $i_L^*$ wird in einem Verstärker 67 mit einstellbaren Verstärkungsfaktor in den nachgebildeten Spannungsabfall $u_r^*$ am Gleichstromwiderstand R der Induktivität L umgerechnet und dem Differenzverstärker 65 zugeführt. Sofern der LC-Filterkreis einen Hochpaßwiderstand H aufweist, ist zur Nachbildung dieses Hochpaßwiderstandes ein weiterer Verstärker 68 und ein Summierglied 69 vorgesehen. Dem weiteren Verstärker 68 wird die Summe $u_r^* + u_L^*$ zugeführt. Die Ausgangsspannung des Verstärkers 68, die den Strom $i_H^*$ durch den Hochpaßwiderstand H darstellt, wird im Summierglied 69 zum nachgebildeten Strom $i_L^*$ addiert. Das Ergebnis stellt den nachgebildeten Filterstrom $i_R^*$ dar.

Der weitere Aufbau der Überwachungseinrichtung entspricht der Fig. 1. Der nachgebildete Filterstrom $i_R^*$ wird einem Siebglied 5 zugeführt, an dessen Ausgang der Grundschwingungsteil des nachgebildeten Filterstromes erscheint. Dieser Grundschwingungsanteil wird in einem Betragsbildner 6 gleichgerichtet und einer Vergleichsschaltung 9 zugeführt. In gleicher Weise wird der gemessene Filterstrom $i_R$ einem Siebglied 7 zugeführt, an dessen Ausgang die Grundschwingung des gemessenen Filterstromes erscheint. Diese wird in einem Betragsbildner 8 gleichgerichtet und ebenfalls der Vergleichsschaltung 9 zugeführt. Die transiente Vergleichsschaltung 9 weist den in Fig. 5 dargestellten Aufbau auf und steuert einen Melde- und Auslösekreis 10 an, der bei einem entsprechenden Störfall den LC-Filterkreis durch Betätigung der Schalteinrichtung 1 vom Netz trennt.

Fig. 9 zeigt als Alternative zu Fig. 4 eine andere Ausführungsform eines Siebgliedes 70, das anstelle der Siebglieder 5, 7, 24, 25, 26 eingesetzt werden kann. Das Siebglied 70 ist als Resonanzfilter aufgebaut und enthält einen Summierverstärker 71, einen Integrator 73 mit einem Verstärker 72 in der Rückführung, sowie einen weiteren Integrator 74 in der dargestellten Schaltung. Die zu glättende Eingangsgröße, beispielsweise der nachgebildete Filterstrom $i_R^*$ aus der Filternachbildung 4 R in Fig. 1, wird dem Summierverstärker 71 mit positivem Vorzeichen zugeführt. Dem Summierverstärker 71 wird mit negativem Vorzeichen das Ausgangssignal des Resonanzfilters 70 und ebenfalls mit negativem Vorzeichen das über den Verstärker 72 geführte Ausgangssignal des Integrators 73 zugeführt. Das Ausgangssignal des Summierverstärkers 71 wird dem ersten Integrator 73 zugeführt, dessen Ausgangsspannung dem zweiten Integrator 74 zugeführt wird.

Die in den Figuren 7 und 8 dargestellten Überwachungseinrichtungen für einphasige Filterkreise können auf dreiphasige Filterkreise erweitert werden, wie dies in Fig. 1 dargestellt ist.

## Patentansprüche

1. Überwachungseinrichtung für einen LC-Filterkreis an einem Wechselspannungsnetz, dessen Kondensatorbatterie ($C_R$) aus einer Anzahl von parallelen Strängen mit jeweils einer Anzahl von in Reihe geschalteten und miteinander mittels durchgehender Querleitungen verbundener Teilkondensatoren mit Sicherungen besteht, wobei ein unter Erfassung der Filterspannung nachgebildeter Filterstrom mit dem gemessenen Filterstrom unter Elimination des Einflusses der Netzoberschwingungen verglichen wird, dadurch gekennzeichnet, daß eine Vergleichsschaltung (9 R) mit differenzierender Wirkung (transiente Vergleichsschaltung) vorgesehen ist, welcher eingangsseitig über einen ersten Siebkreis (5 R) der nachgebildete Filterstrom und über einen zweiten Siebkreis (7 R) der gemessene Filterstrom zugeführt ist, wobei die Vergleichsschaltung nur dann ein Ausgangssignal abgibt, wenn plötzlich ein Unterschied zwischen gemessener und nachgebildeter Grundschwingung des Filterstromes auftritt.

2. Überwachungseinrichtung nach Anspruch 1 für einen dreiphasigen LC-Filterkreis, gekennzeichnet durch folgende Merkmale:

a) es sind drei Strommeßwandler (3 R, 3 S, 3 T) zur Messung der Phasenströme des Filterkreises vorgesehen, denen jeweils ein Tiefpaßfilter (7 R, 7 S, 7 T) zur Unterdrückung der Oberschwingungen und eine Gleichrichterschaltung (8 R, 8 S, 8 T) nachgeschaltet ist, die eine der Amplitude der Grundschwingung des gemessenen Phasenstromes proportionale Gleichspannung abgibt,

b) es sind drei Spannungsmeßwandler (2 R, 2 S, 2 T) zur Messung der an den drei Phasen des Filterkreises abfallenden Spannungen vorgesehen, denen jeweils eine elektronische Filternachbildung (4 R, 4 S, 4 T) nachgeschaltet ist, deren Ausgangsspannung über ein weiteres Tießpaßfilter (5 R, 5 S, 5 T) zur Unterdrückung der Oberschwingungen und eine weitere Gleichrichterschaltung (6 R, 6 S, 6 T) geführt ist, die eine der Amplitude der Grundschwingung des nachgebildeten Phasenstromes proportionale Gleichspannung abgibt,

c) es sind transiente Vergleichsschaltungen (9 R, 9 S, 9 T) zum Vergleich der gemessenen und der nachgebildeten Phasenströme vorgesehen, denen ein Melde- und Auslösekreis (10) nachgeschaltet ist.

3. Überwachungseinrichtung nach Anspruch 1, gekennzeichnet durch eine elektronische Filternachbildung (z. B. 4 R) mit folgenden Merkmalen:

d) ein Addierverstärker (12) zur Ermittlung eines nachgebildeten Spannungsabfalls ($u_L^*$) der Drosselspule, dem die gemessene Phasenspannung ($u_R$ bzw. $u_R'$), ein nachgebildeter Kondensatorspannungsabfall ($u_C^*$) und ein nachgebildeter Spannungsabfall ($u_r^*$) am Gleichstromwiderstand der Drosselspule zugeführt sind,

e) ein Integrator (14) zur Ermittlung eines nachgebildeten Drosselstromes ($i_L^*$), dem die Ausgangsspannung des Addierverstärkers (12) zugeführt ist,

f) ein Verstärker (13) zur Ermittlung des nachgebildeten Spannungsabfalls ($u_R^*$) am Gleichstromwiderstand der Drosselspule, dem die Ausgangsspannung des Integrators (14) zugeführt ist,

g) ein Verstärker (15) zur Ermittlung des nachgebildeten Stromes ($i_H^*$) durch den Hochpaßwiderstand, dem die Ausgangsspannungen des Addierverstärkers (12) und des Verstärkers (13) zugeführt sind,

h) ein weiterer Addierverstärker (16) zur Ermittlung des nachgebildeten Phasenstromes ($i_R^*$), dem die Ausgangsspannungen des Integrators (14) und des Verstärkers (15) zugeführt sind,

i) ein Integrator (17) zur Ermittlung des nachgebildeten Kondensatorspannungsabfalls ($u_C^*$), dem die Ausgangsspannung eines Differenzgliedes (75) zugeführt ist, dem eingangsseitig die Ausgangsspannung des Addierverstärkers (16) und eines weiteren Verstärkers (11) zugeführt sind, dem eingangsseitig der nachgebildete Kondensatorspannungsabfall ($u_C^*$) zugeführt ist (Fig. 3).

4. Überwachungseinrichtung nach Anspruch 1, gekennzeichnet durch eine transiente Vergleichsschaltung mit folgenden Merkmalen:

j) ein Verstärker (30), dem die der Amplitude der Grundschwingung des gemessenen Phasenstromes proportionale Gleichspannung und die der Amplitude der Grundschwingung des nachgebildeten Phasenstromes proportionale Gleichspannung zugeführt sind,

k) ein Siebglied mit mehreren Tiefpässen (24, 25, 26), das die Ausgangsspannung des Verstärkers (30) in eine Gleichgröße umformt,

l) ein Differenzierer (27, 28), dem das Ausgangssignal des Siebgliedes (24, 25, 26) zugeführt ist und der nur bei plötzlichen Phasenstromänderungen ein Ausgangssignal erzeugt (Fig. 5).

5. Überwachungseinrichtung nach Anspruch 1, gekennzeichnet durch eine elektronische Filternachbildung (60) mit folgenden Merkmalen:

m) ein Differenzglied (61) zur Ermittlung eines nachgebildeten Kondensatorstroms ($i_C^*$), dem der gemessene Filterstrom ($i_R$) und ein nachgebildeter Strom ($i_G^*$) durch den Gleichstromleitwert der Kondensatorbatterie zugeführt sind,

n) ein Integrator (62) zur Ermittlung des nachgebildeten Kondensatorspannungsabfalls ($u_C^*$), dem die Ausgangsspannung des Differenzgliedes (61) eingangsseitig zugeführt ist,

o) ein Verstärker (63) zur Ermittlung des nachgebildeten Stroms ($i_G^*$) durch den Gleichstromleitwert der Kondensatorbatterie aus dem nachgebildeten Kondensatorspannungsabfall ($u_C^*$),

p) ein zweiter Differenzverstärker (64), dem die gemessene Filterspannung ($u_R$) und der nachgebildete Kondensatorspannungsabfall ($u_C^*$) zugeführt sind,

q) ein drittes Differenzglied (65) zur Ermittlung des nachgebildeten Spannungsabfalls ($u_L^*$) der Drosselspule aus dem Ausgangssignal des zweiten Differenzgliedes (64) und einem nachgebildeten Spannungsabfall ($u_r^*$) am Gleichstromwiderstand der Drosselspule,

r) ein Integrator (66) zur Ermittlung des nachgebildeten Stroms ($i_L^*$) durch die Drosselspule, dem eingangsseitig der nachgebildete Spannungsabfall ($u_L^*$) der Drosselspule zugeführt ist,

s) ein Verstärker (67) zur Ermittlung des nach-

gebildeten Spannungsabfalls ($u_r^*$) am Gleichstromwiderstand der Drosselspule aus dem nachgebildeten Strom ($i_L^*$) durch die Drosselspule,

t) ein weiterer Verstärker (68) zur Ermittlung des nachgebildeten Stroms ($i_H^*$) durch den Hochpaßwiderstand aus dem Ausgangssignal des zweiten Differenzverstärkers (64),

u) ein Summierglied (69) zur Ermittlung des nachgebildeten Phasenstroms ($i_R^*$) aus dem nachgebildeten Strom ($i_L^*$) durch die Drosselspule und dem nachgebildeten Strom ($i_H^*$) durch ihren Hochpaßwiderstand (Fig. 8).

## Claims

1. A monitoring device for an LC-filter circuit of an a. c. voltage network, whose capacitior group ($C_R$) consists of a number of parallel strings each comprising an number of subcapacitors with safety fuse devices connected in series and connected to one another by lead-through transverse lines, where a filter current simulated by measuring the filter voltage is compared with the measured filter current, with elimination of the influence of the network harmonics, characterised in that a comparison circuit (9 R) which has a differentiating effect (transient comparison circuit) is provided whose input is supplied via a first filter circuit (5 R) with the simulated filter current and via a second filter circuit (7 R) with the measured filter current, where the comparison circuit emits an output signal only when a difference between the measured and the simulated fundamental oscillation of the filter current suddenly occurs.

2. A monitoring device as claimed in Claim 1 for a threephase LC-filter circuit, characterised by the following features:

a) three current measuring transformers (3 R, 3 S, 3 T) are provided for measuring the phase currents of the filter circuit, each of which is followed by a low-pass filter (7 R, 7 S, 7 T) which serves to suppress the harmonics and by a rectifier circuit (8 R, 8 S, 8 T) which emits a d. c. voltage proportional to the amplitude of the fundamental oscillation of the measured phase current;

b) three voltage measuring transformers (2 R, 2 S, 2 T) are provided for measuring the voltage-drops across the three phases of the filter circuit, each of which transformers is followed by an electronic simulated filter (4 R, 4 S, 4 T) whose output voltage is fed across a further low-pass filter (5 R, 5 S, 5 T) which serves to suppress the harmonics and via a further rectifier circuit (6 R, 6 S, 6 T) which emits a d. c. voltage proportional to the fundamental osciallation of the simulated phase current; and

c) transient comparison circuit (9 R, 9 S, 9 T) are provided for comparing the measured and the simulated phase currents, followed by an indicating and triggering circuit (10).

3. A monitoring device as claimed in Claim 1, caracterised by an electronic simulated filter (e. g. 4 R) having the following features:

d) an adder amplifier (12) which serves to determine a simulated voltage-drop ($u_L^*$) across the choke coil and which is supplied with the measured phase voltage ($u_R$ and $u_R'$), a simulated capacitor voltage-drop ($u_C^*$) and a simulated voltage-drop ($u_r^*$) across the d. c. resistor of the choke coil;

e) an integrator (14) which serves to determine a simulated choke current ($i_L^*$) and which is supplied with the output voltage of the adder amplifier (12);

f) an amplifier (13) which serves to determine the simulated voltage drop ($u_R^*$) across the d. c. resistor of the choke coil and which is supplied with the output voltage of the integrator (14);

g) an amplifier (15) which serves to determine the simulated current ($i_H^*$) through the high-pass resistor and which is supplied with the voltage of the adder amplifier (12) and the amplifier (13);

h) a further adder amplifier (16) which serves to determine the simulated phase current ($i_R^*$) and which is supplied with the output voltages of the integrator (14) and the amplifier (15); and

i) an integrator (17) which serves to determine the simulated capacitor voltage drop ($u_C^*$) and which is supplied with the output voltage of a difference element (75) whose input is supplied with the output voltage of the adder amplifier (16) and a further amplifier (11) whose input is supplied with the simulated capacitor voltage drop ($u_C^*$). (Fig. 3).

4. A monitoring device as claimed in Claim 1, caracterised by a transient comparison circuit having the following features:

j) an amplifier (30) supplied with the d. c. voltage which is proportional to the amplitude of the fundamental oscillation of the measured phase current and with the d. c. voltage which is proportional to the amplitude of the fundamental osciallation of the simulated phase current;

k) a filter element having a plurality of low-pass filters (24, 25, 26) which converts the output voltage of the amplifier (30) into an equal value; and

l) a differentiator (27, 28) which is supplied with the output signal of the filter element (24, 25, 26) and which produces an output signal only in the event of sudden changes in phase current. (Fig. 5).

5. A monitoring device as claimed in Claim 1, characterised by an electronic simulated filter (60) having the following features:

m) a difference element (61) which serves to determine a simulated capacitor current ($i_c^*$) and which is supplied with the measured filter current ($i_R$) and a simulated current ($i_G^*$) through the d. c. conductance of the capacitor group;

n) an integrator (61) which serves to determine the simulated capacitor voltage-drop ($u_c^*$) and which is supplied at its input with the output voltage of the difference element (61);

o) an amplifier (63) which serves to determine the simulated current ($i_G^*$) through the d. c. conductance of the capacitor group from the simulated capacitor voltage-drop ($u_c^*$);

p) a second differential amplifier (64) which is supplied with the measured filter voltage ($u_R$) and the simulated capacitor voltage drop ($u_c^*$);

q) a third difference element (65) which serves to determine the simulated voltage-drop ($u_L^*$) of the choke coil from the output signal of the second difference element (64) and a simulated voltage-drop ($u_r^*$) across the d. c. resistor of the choke coil;

r) an integrator (66) which serves to determine the simulated current ($i_L^*$) through the choke coil and which is supplied at its input with the simulated voltage-drop ($u_L^*$) of the choke coil;

s) an amplifier (67) which serves to determine the simulated voltage-drop ($u_r^*$) across the d. c. resistor of the choke coil from the simulated current ($i_L^*$) through the choke coil;

t) a further amplifier (68) which serves to determine the simulated current ($i_H^*$) through the high-pass impedance from the output signal of the second differential amplifier; and

u) an adder (69) which serves to determine the simulated phase current ($i_R^*$) from the simulated current ($i_L^*$) through the choke coil and from the simulated current ($i_H^*$) through its high-pass impedance. (Fig. 8).

**Revendications**

1. Dispositif de contrôle pour un circuit de filtre LC situé dans un réseau à tension alternative et dont la batterie de condensateurs ($C_R$) est constituée par un certain nombre de branches paralèles formées chacune d'un certain nombre de condensateurs partiels branchés en série et reliés entre eux par l'intermédiaire de lignes transversales continues et comportant des fusibles, et dans lequel on compare le courant traversant le filtre, simulé grâce à la détermination de la tension aux bornes du filtre, au courant mesuré traversant le filtre, en éliminant l'influence des harmoniques du réseau, caractérisé par le fait qu'il est prévu un circuit de comparaison (9 R) à action différentielle (circuit de comparaison transitoire) au côté entrée duquel le courant simulé traversant le filtre est envoyé par l'intermédiaire d'un premier circuit de filtrage (5 R) et le courant mesuré traversant le filtre est envoyé par l'intermédiaire d'un second circuit de filtrage (7 R), le circuit de comparaison délivrant un signal de sortie uniquement lorsqu'il apparaît subitement une différence entre l'oscillation fondamentale mesurée et l'oscillation fondamentale simulée du courant traversant le filtre.

2. Dispositif de contrôle suivant la revendication 1 pour un circuit de filtre LC triphasé, caractérisé par les moyens particuliers suivants:

a) il est prévu trois transformateurs de mesure d'intensité (3 R, 3 S, 3 T) servant à mesurer les courants de phase du circuit de filtre et en aval desquels sont branchées respectivement un filtre passe-bas (7 R, 7 S, 7 T) servant à supprimer les harmoniques et un circuit redresseur (8 R, 8 S, 8 T) qui délivre une tension continue proportionnelle à l'amplitude de l'oscillation fondamentale du courant de phase mesuré,

b) il est prévu trois transformateurs de mesure de tension (2 R, 2 S, 2 T) servant à la mesure des tensions chutant dans les trois phases du circuit de filtre et en aval desquels se trouvent branchés des circuits électroniques de simulation de filtre (4 R, 4 S, 4 T) dont la tension de sortie est délivrée par l'intermédiaire d'un autre filtre passe-bas (5 R, 5 S, 5 T) servant à supprimer les harmoniques et d'un autre circuit redresseur (6 R, 6 S, 6 T), qui délivre une tension continue proportionnelle à l'amplitude de la fréquence fondamentale du courant de phase simulé,

c) il est prévu des circuits de comparaison transitoire (9 R, 9 S, 9 T) servant à comparer les courants de phase mesurés et les courants de phase simulés et en aval desquels est branché un circuit de signalisation et de déclenchement (10).

3. Dispositif de contrôle suivant la revendication 1, caractérisé par un circuit électronique de simulation de filtre (par exemple 4 R) possédant les caractéristiques suivantes:

d) un amplificateur additionneur (12) servant à déterminer la chute de tension simulée ($U_L^*$) dans la bobine d'arrêt et auquel sont envoyées la chute de tension de phase mesurée ($u_R$ ou $u_R'$), une chute de tension simulée ($u_c^*$) aux bornes du condensateur et une chute de tension simulée ($u_r^*$) aux bornes de la résistance à courant continu de la bobine d'arrêt,

e) un intégrateur (14) servant à déterminer un courant simulé ($i_L^*$) dans la bobine d'arrêt et auquel est envoyée la tension de sortie de l'amplificateur additionneur (12),

f) un amplificateur (13) servant à déterminer la chute de tension simulée ($u_R^*$) aux bornes de la résistance en courant continu de la bobine d'arrêt et auquel est envoyée la tension de sortie de l'intégrateur (14),

g) un amplificateur (15) servant à déterminer le

courant simulé ($i_H^*$) traversant la résistance de filtre passe-haut et auquel sont envoyées les tensions de sortie de l'amplificateur additionneur (12) et de l'amplificateur (13),

h) un autre amplificateur additionneur (16) servant à déterminer le courant de phase simulé ($i_R^*$) et auquel sont envoyées les tensions de sortie de l'intégrateur (14) et de l'amplificateur (15),

i) un intégrateur (17) servant à déterminer la chute de tension simulée ($u_c^*$) aux bornes du condensateur et auquel est envoyée la tension de sortie d'un circuit différentiateur (75) au côté entrée duquel sont envoyées la tension de sortie de l'amplificateur additionneur (16) et la tension de sortie d'un autre amplificateur (11), au côté entrée duquel est envoyée la chute de tension simulée ($u_c^*$) aux bornes des condensateurs (figure 3).

4. Dispositif de contrôle suivant la revendication 1, caractérisé par un circuit de comparaison transitoire possédant les moyens particuliers suivants:

j) un amplificateur (30), auquel sont envoyées la tension continue, qui est proportionnelle à l'amplitude de l'oscillation fondamentale du courant de phase mesuré, et la tension continue proportionnelle à l'amplitude de l'oscillation fondamentale du courant de phase simulé,

k) un circuit de filtrage comportant plusieurs filtres passe-bas (24, 25, 26) et qui transforme la tension de sortie de l'amplificateur (30) en une grandeur continue,

l) un circuit différentiateur (27, 28), auquel est envoyé le signal de sortie du circuit de filtrage (24, 25, 26) et qui produit un signal de sortie uniquement dans le cas de variations brusques du courant de phase (figure 5).

5. Dispositif de contrôle suivant la revendication 1, caractérisé par un circuit électronique de simulation de filtre (60) possédant les moyens particuliers suivants:

m) un circuit différentiateur (61) servant à déterminer un courant simulé ($i_c^*$) traversant les condensateurs et auquel sont envoyés le courant mesuré ($i_R$) traversant le filtre et un courant simulé ($i_G^*$) à travers l'élément de conductance de la batterie de condensateurs,

n) un intégrateur (62) servant à déterminer la chute de tension simulée ($i_c^*$) aux bornes du condensateur et au côté entrée duquel est envoyée la tension de sortie du circuit différentiateur (61),

o) un amplificateur (63) servant à déterminer le courant simulé ($i_G^*$) traversant l'élément de conductance de la batterie de condensateurs à partir de la chute de tension simulée ($u_c^*$) aux bornes des condensateurs,

p) un second amplificateur différentiel (64) auquel sont envoyées la tension mesurée du filtre ($u_R$) et la chute de tension simulée ($u_c^*$) aux bornes des condensateurs,

q) un troisième circuit différentiateur (65) servant à déterminer la chute de tension simulée ($u_L^*$) aux bornes de la bobine d'arrêt à partir du signal de sortie du second circuit différentiateur (64) et d'une chute de tension simulée ($u_r^*$) aux bornes de la résistance en courant continu de la bobine d'arrêt,

r) un intégrateur (66) servant à déterminer le courant simulé ($i_L^*$) traversant la bobine d'arrêt et au côté entrée duquel est envoyée la chute de tension simulée ($u_L^*$) aux bornes de la bobine d'arrêt,

s) un amplificateur (67) servant à déterminer la chute de tension simulée ($u_r^*$) aux bornes de la résistance en courant continu de la bobine d'arrêt à partir du courant simulé ($i_L^*$) traversant la bobine d'arrêt,

t) un autre amplificateur (68) servant à déterminer le courant simulé ($i_H^*$) traversant la résistance de filtre passe-haut à partir du signal de sortie du second amplificateur différentiel (64), et

u) un circuit additionneur (69) servant à déterminer le courant de phase simulé ($i_R^*$) à partir du courant simulé ($i_L^*$) traversant la bobine d'arrêt et du courant simulé ($i_H^*$) traversant la résistance de filtres passe-haut (figure 8).

FIG 1

FIG 4

FIG 2

FIG 3

FIG 5

FIG 6

FIG 7

FIG 8

FIG 9